# EUROPEAN PATENT APPLICATION

(11) **EP 4 837 998 A1**
(43) Date of publication of application: **11.11.2026**
(21) Application number: 24915715.7
(22) Date of filing: 24.12.2024
(51) Int. Cl.: C25B 9/23, C25B 1/042, C25B 9/00, C25B 9/73, C25B 11/052, C25B 13/04, C25B 13/07

(54) **SOLID OXIDE ELECTROLYSIS CELL AND USE OF SAME**

(30) Priority: 04.01.2024 JP 2024000130
(71) Applicant: Niterra Co., Ltd., Nagoya-shi, Aichi 461-0005 (JP)
(72) Inventor: OKUYAMA, Yasuo, Nagoya-shi, Aichi 461-0005 (JP)
(74) Representative: Grünecker Patent- und Rechtsanwälte PartG mbB
(86) International application number: PCT/JP2024/045571
(87) International publication number: WO 2025/146792

(57) **Abstract**

Provided is a technique for suppressing occurrence of cracking in a solid electrolyte layer. A solid oxide electrolysis cell includes an air electrode containing a complex oxide having a perovskite structure, a fuel electrode, and a solid electrolyte layer disposed between the air electrode and the fuel electrode. The fuel electrode has nano-cracks formed in an interface region which extends 10 µm from an interface on the solid electrolyte layer side, and nano-cracks formed in a surface region which extends 10 µm from a surface located opposite the solid electrolyte layer side. The number of the nano-cracks in the surface region is greater than the number of the nano-cracks in the interface region.

## Description

### TECHNICAL FIELD

The present disclosure relates to a solid oxide electrolysis cell and use of the same.

### BACKGROUND ART

A solid oxide fuel cell (hereinafter referred to as an "SOFC") which generates electric power through electrochemical reaction between hydrogen and oxygen has been known. For example, a unit fuel cell, which is a constituent unit of the SOFC disclosed in Patent Document 1, includes an electrolyte layer containing a solid oxide, an air electrode disposed on one side of the electrolyte layer, and a fuel electrode disposed on the other side of the electrolyte layer. Oxygen ions dissociated from oxygen supplied to the air electrode move to the fuel electrode in accordance with the oxygen ion conductivity of the solid electrolyte and react with hydrogen contained in a fuel gas supplied to the fuel electrode, thereby producing water vapor and generating electricity.

It has been known that the above-mentioned SOFC can be used as a solid oxide electrolysis cell (hereinafter referred to simply as an "SOEC") by supplying electricity thereto in a reverse direction, and is used as an energy storage technique of a type of converting water vapor into hydrogen using, for example, surplus electric power, which is an issue in the process of introducing renewable energy. When water vapor is supplied to the fuel electrode and a current is caused to flow between the air electrode and the fuel electrode, the water vapor is electrolyzed, whereby hydrogen is generated from the fuel electrode, and the oxygen ions produced at the fuel electrode move to the air electrode in accordance with the oxygen ion conductivity of the solid electrolyte, and oxygen is generated from the air electrode.

### PRIOR ART DOCUMENT

### PATENT DOCUMENT

Patent Document 1: JP2023-080459A

### SUMMARY OF THE INVENTION

### PROBLEM TO BE SOLVED BY THE INVENTION

In general, in an SOFC, oxygen is consumed at the fuel electrode during use, which results in a decrease in gas pressure. In contrast, in an SOEC, oxygen is generated on the air electrode side during use, which results in an increase in gas pressure. In this case, a stress different from that in the SOFC acts, which brings about the possibility of occurrence of cracking in the solid electrolyte layer. In addition, in general, as to the SOEC, a technique for suppressing lowering of current density has been demanded.

### MEANS FOR SOLVING THE PROBLEM

The present disclosure can be realized as the following modes.

(1) According to one mode of the present disclosure, a solid oxide electrolysis cell is provided. This solid oxide electrolysis cell includes an air electrode containing a complex oxide having a perovskite structure, a fuel electrode, and a solid electrolyte layer disposed between the air electrode and the fuel electrode. The fuel electrode has nano-cracks formed in an interface region which extends 10 µm from an interface on the solid electrolyte layer side, and nano-cracks formed in a surface region which extends 10 µm from a surface located opposite the solid electrolyte layer side. The number of the nano-cracks in the surface region is greater than the number of the nano-cracks in the interface region. According to the solid oxide electrolysis cell of this mode, occurrence of cracking in the solid electrolyte layer can be suppressed.
(2) In the solid oxide electrolysis cell described in the above paragraph (1), a fuel gas containing water vapor may be supplied to the fuel electrode at a flow rate of 100 to 130 liters/ (min·cm²). According to the solid oxide electrolysis cell of this mode, occurrence of cracking in the solid electrolyte layer can be suppressed.
(3) In the solid oxide electrolysis cell described in the above paragraph (1) or (2), a gas containing oxygen may be supplied to the air electrode at a flow rate of 30 to 50 liters/ (min·cm²). According to the solid oxide electrolysis cell of this mode, occurrence of cracking in the solid electrolyte layer can be suppressed.
(4) In the solid oxide electrolysis cell described in any one of the above paragraphs (1) to (3), an air chamber that the air electrode faces may have a volume of 9 cm³ to 11 cm³. According to the solid oxide electrolysis cell of this mode, occurrence of cracking in the solid electrolyte layer can be suppressed.
(5) According to another mode of the present disclosure, a separator-equipped cell is provided. This separator-equipped cell includes the solid oxide electrolysis cell as described in any one of the above paragraphs (1) to (4) and a separator which is disposed on the solid electrolyte layer and has an opening at its center. According to the separator-equipped cell of this mode, occurrence of cracking in the solid electrolyte layer can be suppressed.
(6) According to still another mode of the present disclosure, an electrolysis stack in which a plurality of the solid oxide electrolysis cells as described in any one of the above paragraphs (1) to (4) are stacked is provided. According to the electrolysis stack of this mode, occurrence of cracking in the solid electrolyte layer can be suppressed.
(7) According to still another mode of the present disclosure, a hot module is provided. This hot module includes the electrolysis stack as described in the above paragraph (6), a vaporizer for producing water vapor to be supplied to the electrolysis stack, a heat exchanger for performing heat exchange with a gas to be supplied to the electrolysis stack, a heater for heating the electrolysis stack, and a heat insulator in which the electrolysis stack, the vaporizer, the heat exchanger, and the heater are disposed. According to the hot module of this mode, occurrence of cracking in the solid electrolyte layer can be suppressed.
(8) According to still another mode of the present disclosure, a hydrogen production apparatus including the hot module as described in the above paragraph (7) is provided. According to the hydrogen production apparatus of this mode, occurrence of cracking in the solid electrolyte layer can be suppressed.

Notably, the present invention can be realized in various modes. For example, the present invention can be realized as a method of manufacturing a solid oxide electrolysis cell.

### BRIEF DESCRIPTION OF THE DRAWINGS

[FIG. 1] Perspective view showing the exterior structure of an electrolysis stack which is one embodiment of the present disclosure.
[FIG. 2] Exploded schematic view of the electrolysis stack cut along a line II-II of FIG. 1.
[FIG. 3] Schematic top view of a cell with a separator.
[FIG. 4] Block diagram of a hydrogen production apparatus.
[FIG. 5] SEM image obtained by photographing nano-cracks in a fuel electrode.

### MODES FOR CARRYING OUT THE INVENTION

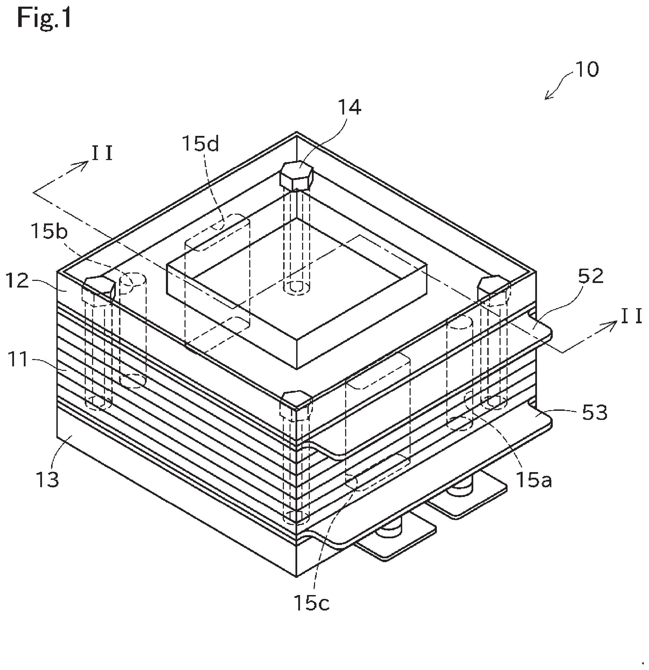

FIG. 1 is a perspective view showing the exterior structure of an electrolysis stack 10 which is one embodiment of the present disclosure. The electrolysis stack 10 in the present embodiment is a stack of solid oxide electrolysis cells (SOECs). In FIG. 1, one example of the structure of the electrolysis stack 10 is shown.

The electrolysis stack 10 includes a plurality of quadrangular reaction units 11 stacked in a thickness direction and generally quadrangular end plates 12 and 13 which sandwich the reaction units 11 in the thickness direction. Bolts 14 are disposed at four corners of a peripheral edge portion of the electrolysis stack 10. The bolts 14 penetrate the end plate 12, the reaction units 11, and the end plate 13 in the thickness direction. The reaction units 11 and the end plates 12 and 13 are fastened with the bolts 14.

The electrolysis stack 10 includes a terminal plate 52 disposed between the end plate 12 and a reaction unit 11 and a terminal plate 53 disposed between the end plate 13 and a reaction unit 11. The reaction units 11 are connected in series between the terminal plates 52 and 53. Protruding portions of the terminal plates 52 and 53 function as terminals. Of course, the above-described configuration may be modified in such a manner that the terminal plates 52 and 53 are omitted, reaction units 11 located adjacent to the end plates 12 and 13 are electrically connected to the end plates 12 and 13, and the end plates 12 and 13 are used as the terminals of the electrolysis stack 10.

Four spaces which penetrate the electrolysis stack 10 in the thickness direction are formed in the peripheral edge portion of the electrolysis stack 10. The four spaces respectively function as a passage 15a through which a gas flows from the outside of the electrolysis stack 10 to the fuel chamber 33 (which will be described later) of each reaction unit 11, a passage 15b through which a gas flows from the fuel chamber 33 to the outside of the electrolysis stack 10, a passage 15c through which a gas flows from the outside of the electrolysis stack 10 to an air chamber 35 (which will be described later) of each reaction unit 11, and a passage 15d through which a gas flows from the air chamber 35 to the outside of the electrolysis stack 10.

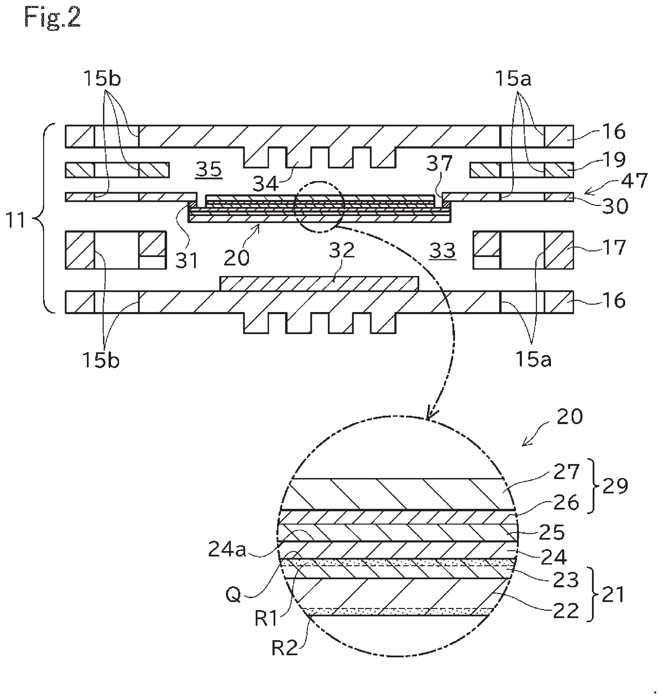

FIG. 2 is an exploded schematic view of the electrolysis stack 10 cut along a line II-II of FIG. 1 which passes through the passages 15a and 15b. FIG. 2 shows a schematic sectional view of one reaction unit 11, taken along the line II-II, in a state in which the components of the reaction unit 11 are separated in the thickness direction. The reaction unit 11 includes an inter connector 16, a fuel electrode frame 17, a cell with a separator (hereinafter referred to as the "separator-equipped cell") 47, and an air electrode frame 19 arranged in this order in the thickness direction. Notably, in FIG. 2, the thicknesses of respective portions are exaggerated.

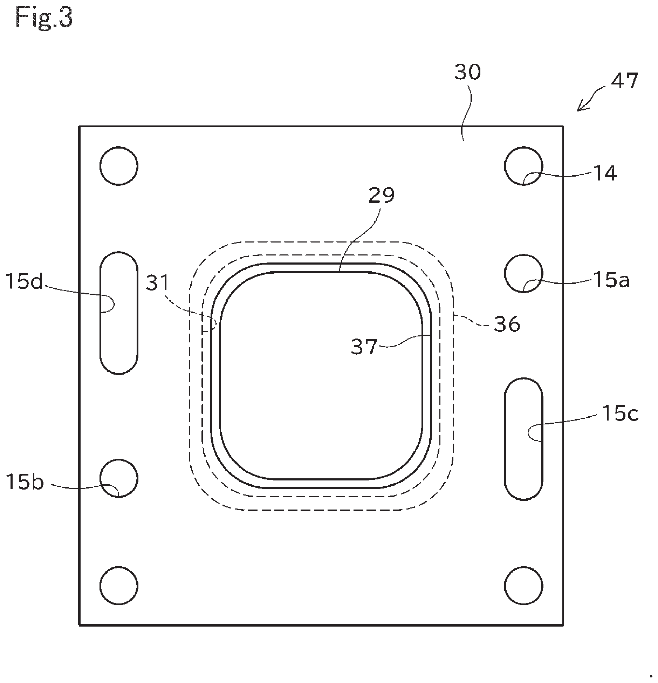

FIG. 3 is a schematic top view of the separator-equipped cell 47. The separator-equipped cell 47 includes an electrolysis cell 20 and a separator 30 disposed on the electrolysis cell 20. Holes (the passages 15a, 15b, 15c, and 15d) penetrate the inter connector 16, the fuel electrode frame 17, the separator 30, and the air electrode frame 19. The electrolysis cell 20 will be described later.

The separator 30 is a generally quadrangle frame-shaped member having an opening 37 which is larger than an air electrode 29, which will be described later. An example of the material of the separator 30 is stainless steel. The separator 30 is gastightly joined to a front surface 24a of a solid electrolyte layer 24 (which will be described later) by using a brazing filler metal 31, without being joined to the air electrode 29.

The inter connectors 16 are disposed at opposite ends of the electrolysis cell 20 in the thickness direction. Each inter connector 16 is formed of a generally quadrangle plate-shaped member having electrical conductivity. The inter connector 16 establishes electrical connection between reaction units 11 located adjacent to each other in the thickness direction. An example of the material of the inter connector 16 is stainless steel.

The fuel electrode frame 17 is a generally quadrangle frame-shaped member disposed between the inter connector 16 and the separator 30. An example of the material of the fuel electrode frame 17 is stainless steel. The fuel electrode frame 17 surrounds the electrolysis cell 20 and a current collector 32 provided at the center of the inter connector 16.

The current collector 32 establishes electrical connection between the fuel electrode 21 and the inter connector 16. An example of the material of the current collector 32 is a gas-permeable porous body formed of a metal such as Ni. The fuel chamber 33 surrounded by the inter connector 16, the fuel electrode frame 17, and the separator 30 is formed inside the fuel electrode frame 17.

The air electrode frame 19 is a generally quadrangle frame-shaped member disposed between the inter connector 16 and the separator 30. An example of the material of the air electrode frame 19 is an insulating material such as mica. The air electrode frame 19 surrounds the current collector 34 provided at the center of the inter connector 16. The current collector 34 establishes electrical connection between the air electrode 29 and the inter connector 16. The current collector 34 of the present embodiment is formed integrally with the inter connector 16. However, the present invention is not limited to such a structure. Needless to say, the current collector 34 may be a member which is separate from the inter connector 16.

An air chamber 35 surrounded by the inter connector 16, the air electrode frame 19, and the separator 30 is formed inside the air electrode frame 19. The separator 30 separates the fuel chamber 33 and the air chamber 35, thereby preventing mixing of the fuel gas within the fuel chamber 33 and the oxidizer gas (oxygen, air, etc.) within the air chamber 35.

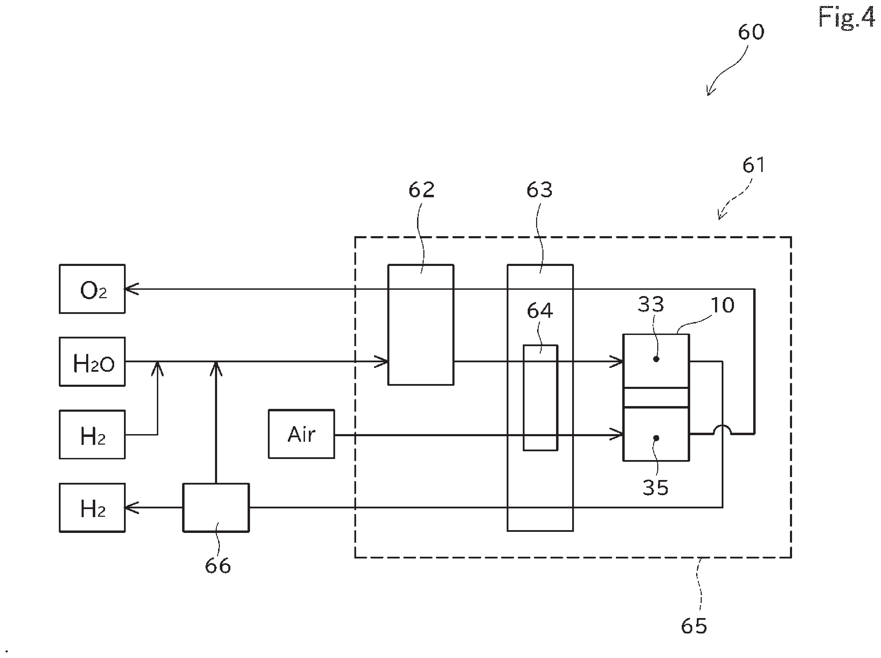

A hydrogen production apparatus 60 and a hot module 61 which include the electrolysis stack 10 will be described with reference to FIG. 4. FIG. 4 is a block diagram of the hydrogen production apparatus 60. The hydrogen production apparatus 60 is an apparatus for producing hydrogen from water and includes a hot module 61.

The hot module 61 includes the electrolysis stack 10, a vaporizer 62 which produces water vapor to be supplied to the electrolysis stack 10, a heat exchanger 63 which performs heat exchange between gases supplied to the electrolysis stack 10 and gases produced by the electrolysis stack 10, and a heater 64 which heats the electrolysis stack 10. In the hot module 61, in order to reduce heat dissipation, the electrolysis stack 10, the vaporizer 62, the heat exchanger 63, and the heater 64 are disposed in a heat insulator 65.

The vaporizer 62 includes a heat exchanger which performs heat exchange with a high-temperature gas containing oxygen produced by the electrolysis stack 10, and heats water to produce water vapor. The water vapor produced by the vaporizer 62 contains hydrogen which suppresses oxidation of a catalyst contained in the fuel electrode 21. The hydrogencontaining water vapor undergoes heat exchange, in the heat exchanger 63, with hydrogen and oxygen produced by the electrolysis stack 10, is heated by the heater 64 to an operating temperature of the electrolysis stack 10, and is supplied to the fuel chambers 33 of the electrolysis stack 10. Air undergoes heat exchange, in the heat exchanger 63, with hydrogen and oxygen produced by the electrolysis stack 10, is heated by the heater 64 to the operating temperature of the electrolysis stack 10, and is supplied to the air chambers 35 of the electrolysis stack 10.

Examples of the heat insulator 65 include heat-resistant fibers such as ceramic wool, refractory ceramic fiber (RCF), and biosoluble fiber (AES) and heat resistant containers formed of these heat-resistant fibers. The heat-resistant fibers are disposed to fill the gaps between the electrolysis stack 10, the vaporizer 62, the heat exchanger 63, and the heater 64. A condenser 66 is a device for cooling hydrogen gas, and the liquefied water is supplied to the vaporizer 62 as raw water.

### (Electrolysis cell)

As shown in FIG. 2, the electrolysis cell 20 includes the air electrode 29, the fuel electrode 21, and the solid electrolyte layer 24 provided between the air electrode 29 and the fuel electrode 21. Although the electrolysis cell 20 of the present embodiment includes a reaction prevention layer 25 between the solid electrolyte layer 24 and the air electrode 29, the reaction prevention layer 25 may be omitted. In addition, in the present embodiment, the air electrode 29 includes an air electrode functional layer 26 and an air electrode current collecting layer 27 in order of proximity to the solid electrolyte layer 24. Although no particular limitation is imposed on the thickness of the electrolysis cell 20, the thickness of the electrolysis cell 20 may be, for example, 300 µm to 3 mm. Although no particular limitation is imposed on the shape of the electrolysis cell 20 as viewed from the upper side, examples of the shape of the electrolysis cell 20 include a square shape in which each side has a length of 1 to 10 cm, a rectangular shape in which the longer sides have a length of 5 to 30 cm and the shorter sides have a length of 3 to 15 cm, and a circular shape having a diameter of 10 cm. The electrolysis stack 10 is formed by connecting the plurality of electrolysis cells 20 in series by the inter connectors 16.

The fuel electrode 21 is formed by using nickel oxide and oxygen ion conducting ceramic particles as materials. Nickel oxide (NiO) used as a material of the fuel electrode 21 converts to nickel through a reduction step which will be described later. The fuel electrode 21 of the present embodiment is a thin-plate-shaped porous fired body formed of nickel and YSZ (yttria-stabilized zirconia). Examples of the ceramic material having oxygen ion conductivity include YSZ (yttria-stabilized zirconia), ScSZ (scandia-stabilized zirconia), (Gd,Ce)O₂; i.e., GDC (gadolinium-doped ceria), (Sm,Ce)O₂; i.e., SDC (samarium-doped ceria), LaGaO₃ (lanthanum gallate), etc. The fuel electrode 21 may include a single type of ceramic material or two or more types of ceramic materials. Although no particular limitation is imposed on the thickness of the fuel electrode 21, the thickness of the fuel electrode 21 is, for example, 0.3 to 3 mm. In the present embodiment, of the constituent members of the electrolysis cell 20, the fuel electrode 21 has the largest thickness and functions as a support (a support substrate; the most rigid member) of the electrolysis cell 20.

The fuel electrode 21 functions as a cathode of the electrolysis cell 20. The fuel electrode 21 includes a fuel electrode functional layer 23 and a fuel electrode substrate layer 22 arranged in this order from the solid electrolyte layer 24 side. In the present embodiment, the fuel electrode 21 includes the fuel electrode functional layer 23 and the fuel electrode substrate layer 22 whose porosity is greater than that of the fuel electrode functional layer 23, and the fuel electrode functional layer 23 and the fuel electrode substrate layer 22 are arranged in this order from the solid electrolyte layer 24 side. By virtue of this configuration, the strength of the fuel electrode functional layer 23 can be secured. The thickness of the fuel electrode substrate layer 22 is preferably larger than that of the fuel electrode functional layer 23. Although no particular limitation is imposed on the porosity of the fuel electrode functional layer 23, the porosity of the fuel electrode functional layer 23 is preferably, for example, 30% or less, more preferably 25% or less and 5% or greater, more preferably 10% or greater. Although no particular limitation is imposed on the porosity of the fuel electrode substrate layer 22, the porosity of the fuel electrode substrate layer 22 is preferably, for example, 50% or less, more preferably 40% or less and 10% or greater, more preferably 20% or greater. Notably, the fuel electrode 21 may be formed by a single layer in place of the fuel electrode functional layer 23 and the fuel electrode substrate layer 22.

The fuel electrode substrate layer 22 is a plate-shaped porous fired body containing a transition metal and an oxygen ion conducting material. The fuel electrode substrate layer 22 may contain nickel (Ni) as a transition metal. The fuel electrode substrate layer 22 may contain, as an oxygen ion conducting material, a zirconia-based material, such as a yttria-stabilized zirconia (such as 8YSZ or 10YSZ) or a scandia-stabilized zirconia (ScSZ), a ceria-based material, such as a gadolinium-doped ceria (GDC: (Ce,Gd)O₂) or a samarium-doped ceria (SDC: (Ce,Sm)O₂), or yttria (Y₂O₃).

The fuel electrode substrate layer 22 may have a thickness of, for example, 0.2 mm to 5.0 mm. In the case where the fuel electrode substrate layer 22 functions as a substrate, the fuel electrode substrate layer 22 may have the largest thickness among the constituent members of the electrolysis cell 20. In the fuel electrode substrate layer 22, the volume ratio of Ni may be, for example, 20 to 50% by volume, and the volume ratio of the oxygen ion conducting material may be, for example, 30 to 60% by volume.

The fuel electrode functional layer 23 is disposed between the fuel electrode substrate layer 22 and the solid electrolyte layer 24. The fuel electrode functional layer 23 is a plate-shaped porous fired body containing a transition metal and an oxygen ion conducting material. The fuel electrode functional layer 23 contains at least Ni as a transition metal. The fuel electrode functional layer 23 may further contain Fe or Cu as a transition metal. The fuel electrode functional layer 23 contains, as an oxygen ion conducting material, a zirconia-based material, such as a yttria-stabilized zirconia (such as 8YSZ or 10YSZ) or a scandia-stabilized zirconia (ScSZ), or a ceria-based material, such as a gadolinium-doped ceria (GDC: (Ce,Gd)O₂) or a samarium-doped ceria (SDC: (Ce,Sm)O₂).

The fuel electrode functional layer 23 may have a thickness of, for example, 1.0 µm to 30 µm. In the fuel electrode functional layer 23, the volume ratio of Ni may be, for example, 30 to 60% by volume, and the volume ratio of the oxygen ion conducting material may be, for example, 40 to 70% by volume.

The fuel electrode 21 has nano-cracks formed in an interface region R1 extending 10 µm from an interface Q on the solid electrolyte layer 24 side and in a surface region R2 extending 10 µm from its surface located opposite the solid electrolyte layer 24 side. The number of the nano-cracks in the surface region R2 is greater than the number of the nano-cracks in the interface region R1. The inventor found that occurrence of cracking in the solid electrolyte layer 24 can be suppressed by forming nano-cracks as described above. Formation of nano-cracks and the amount of nano-cracks can be adjusted, for example, by a method of adjusting the highest temperature, a high temperature holding time, a temperature elevating speed, and a temperature lowering speed at the time of firing during production of the electrolysis cell 20. The details of the method will be described later. In the present specification, the term "nano-cracks" means cracks which are formed along the grain boundaries between grains which constitute the fuel electrode 21, whose widths are 1 nm or greater and 100 nm or less, and whose lengths are 10 nm or greater and 999 nm or less. The number of the nano-cracks in the interface region R1 and the number of the nano-cracks in the surface region R2 can be measured by observing a cross section of the layer in each region at a magnification of 30,000 times under an SEM. The number of the nano-cracks means the total number of nano-cracks found in arbitrary 10 fields of vision in each region. Since each field of vision has a size of 1.3 µm (vertical length) × 1.8 µm (horizontal length), the number of the nano-cracks is the total number of nano-cracks present in a region of 23.4 µm², which is the total of arbitrary 10 fields of vision.

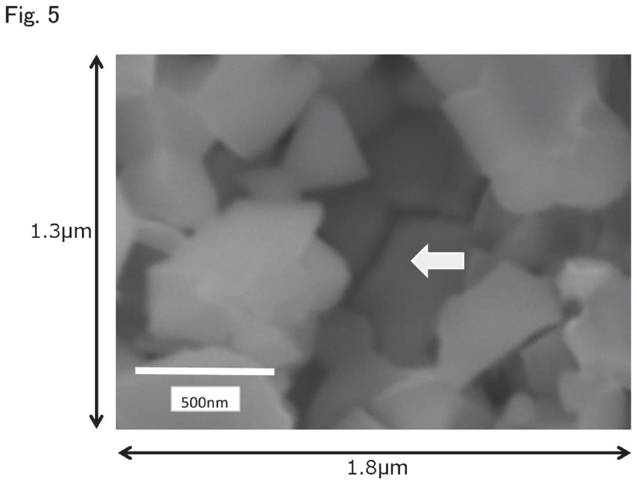

FIG. 5 is an SEM image obtained by photographing nano-cracks in the fuel electrode 21. FIG. 5 is an SEM image obtained by photographing the surface region R2 of the fuel electrode 21. A black portion present at a center portion of the surface of a sheet of paper on which FIG. 5 is drawn (hereinafter referred to the "paper surface of FIG. 5") is a nano-crack. This nano-crack is elongated in a direction from the top right of the paper surface of FIG. 5 toward the bottom left of the paper surface, and is bent at two locations in the center portion of the paper surface.

The solid electrolyte layer 24 is a thin-plate-shaped dense fired body. The solid electrolyte layer 24 is formed of, for example, a solid oxide such as YSZ (yttria-stabilized zirconia), ScSZ (scandia-stabilized zirconia), SDC (samarium-doped ceria), GDC (gadolinium-doped ceria), or a perovskite-type oxide. Examples of the perovskite-type oxide include lanthanum gallate-based oxides having a perovskite-type structure. Although no particular limitation is imposed on the thickness of the solid electrolyte layer 24, the thickness of the solid electrolyte layer 24 is, for example, 3 to 30 µm.

In the present embodiment, the solid electrolyte layer 24 is disposed between the fuel electrode 21 and the reaction prevention layer 25. The solid electrolyte layer 24 has a function of allowing passage of oxygen ions produced in the air electrode 29. The solid electrolyte layer 24 may contain zirconium (Zr), and the solid electrolyte layer 24 may contain Zr in the form of zirconia (ZrO₂). The solid electrolyte layer 24 may contain ZrO₂ as a main component. The solid electrolyte layer 24 may contain an additive such as Y₂O₃ and/or Sc₂O₃ in addition to the ZrO₂. These additives function as a stabilizer. In the solid electrolyte layer 24, the compositional ratio by mole of the stabilizer to ZrO₂ (i.e., stabilizer : ZrO₂) is preferably about 3:97 to 20:80. Namely, examples of the material of the solid electrolyte layer 24 include zirconia-based materials such as a yttria-stabilized zirconia (e.g., 3YSZ, 8YSZ, or 10YSZ) and ScSZ.

The air electrode 29 is disposed on the reaction prevention layer 25. The air electrode 29 functions as an anode of the electrolysis cell 20. The air electrode 29 may contain, for example, a lanthanum-containing perovskite-type complex oxide as a main component. Examples of the lanthanum-containing perovskite-type complex oxide include LSCF (lanthanum strontium cobalt ferrite), lanthanum manganite, lanthanum cobaltite, and lanthanum ferrite. In addition, the lanthanum-containing perovskite-type complex oxide may be doped with strontium, calcium, chromium, cobalt, iron, nickel, aluminum, or the like. The air electrode 29 may have a thickness of, for example, 5 µm to 150 µm.

The air electrode 29 contains a complex oxide having a perovskite structure. The composition of the complex oxide is represented by the general formula ABO₃. However, the ratio among A, B, and O is not strictly required to be 1:1:3. The ideal unit lattice of the complex oxide having a perovskite structure represented by the general formula ABO₃ is cubic, with element A located at the corners of the unit lattice, element B located at the body center of the unit lattice, and oxygen located at the face center of the unit lattice. In the present disclosure, the location of each corner of the unit lattice where element A is located will be referred to as the "site A," and the location of the body center of the unit lattice where element B is located will be referred to as the "site B."

It is preferred that an atom of at least one of La and Sr is contained in the site A. It is preferred that an atom of at least one of Co and Fe is contained in the site B. Specific examples of such complex oxides, used as the material of the air electrode 29, include LSCF (i.e., (La,Sr)(Co,Fe)O₃), LSF (i.e., (La,Sr)FeO₃), LSC (i.e., (La,Sr)CoO₃), LNF (i.e., La(Ni,Fe)O₃), and SSC (i.e., (Sm,Sr)CoO₃). These complex oxides are substances having oxygen ion conductivity and electron conductivity and are also called mixed-conducting materials. In the present embodiment, the air electrode 29 is a thin-plate-shaped porous fired body formed from a material containing lanthanum strontium cobalt ferrite LSCF (La_{0.6}Sr_{0.4}Co_{0.2}Fe_{0.8}O₃).

The air electrode 29 may contain a complex oxide as a "main component." The expression that a composition X contains a substance Y as a "main component" means that the proportion of the substance Y with respect to the entire composition X is preferably 60% by mass or more, more preferably 70% by mass or more, and further preferably 90% by mass or more. The air electrode 29 may contain components other than the complex oxide. The material of the air electrode 29 may be a powder (having an average particle diameter of, for example, about 0.1 µm to 5 µm), a crushed material (having an average particle diameter of, for example, about 5 µm to 500 µm), or a mass larger than the crushed material.

The air electrode current collecting layer 27 includes a complex oxide having a perovskite structure represented by the general formula ABO₃. No particular limitation is imposed on the complex oxide, and examples of the complex oxide include LSCF, LSF, LSC, LNF, and SSC. The air electrode functional layer 26 may contain a component other than the complex oxide contained in the air electrode current collecting layer 27. The air electrode functional layer 26 may be converted to a composite with, for example, the material (ceria, zirconia, etc.) of the solid electrolyte layer 24, which will be described later. Although no particular limitation is imposed on the thickness of the air electrode current collecting layer 27, the thickness of the air electrode current collecting layer 27 may be, for example, 5 to 100 µm. Although no particular limitation is imposed on the thickness of the air electrode functional layer 26, the thickness of the air electrode functional layer 26 may be, for example, 5 to 20 µm. Notably, the air electrode functional layer 26 may be omitted, and the air electrode functional layer 26 may be formed without containing Ce.

There is the possibility that the air electrode 29 separates from the solid electrolyte layer 24 due to a difference in thermal expansion coefficient therebetween. A conventional technique which overcomes such a problem is to provide, between the air electrode 29 and the solid electrolyte layer 24, a composite material obtained by mixing an electrolyte into the material of the air electrode 29. However, in the case where a Zr-based material is used as an electrolyte material, if the air electrode 29 contains Sr, a problem of formation of SrZrO₃ (SZO) arises. Therefore, in such a case, for example, GDC (gadolinium-doped ceria) or SDC (samarium-doped ceria) is used as an electrolyte material to be mixed. Preferably, an intermediate layer formed by mixing an electrolyte and a complex oxide may be disposed between the air electrode 29 and the solid electrolyte layer 24. This intermediate layer corresponds to the air electrode functional layer 26. However, the air electrode functional layer 26 may be omitted from the air electrode 29.

If Sr (strontium) contained in the air electrode 29 diffuses to the solid electrolyte layer 24 side, and the diffused Sr reacts with Zr (zirconium) contained in the solid electrolyte layer 24, SrZrO₃ (hereinafter referred to also as "SZO"), which is a high-resistant substance, is produced. If SZO is produced in the shape of a layer in the region between the air electrode 29 and the solid electrolyte layer 24, the electrolytic performance drops. It is preferred that the reaction prevention layer 25 containing, for example, GDC (gadolinium-doped ceria) is disposed between the air electrode 29 and the solid electrolyte layer 24 so as to suppress such production of SZO. By virtue of such a configuration, it is possible to effectively suppress formation of SZO through the reaction between Sr diffused from the air electrode 29 and Zr contained in the solid electrolyte layer 24. However, the reaction prevention layer 25 may be omitted from the electrolysis cell 20. Examples of the material of the reaction prevention layer 25 include a ceria-based material containing cerium (Ce) with a rare earth metal which is dissolved in Ce. Although no particular limitation is imposed, the reaction prevention layer 25 is preferably a thin-plate-shaped dense fired body formed of, for example, ceria. Although no particular limitation is imposed on ceria, examples of the ceria species include GDC (gadolinium-doped ceria) and SDC (samarium-doped ceria).

In the present embodiment, the reaction prevention layer 25 is disposed between the solid electrolyte layer 24 and the air electrode 29. The reaction prevention layer 25 has a function of suppressing formation of a high-resistant layer between the solid electrolyte layer 24 and the air electrode 29. The reaction prevention layer 25 may have a thickness of, for example, 3 µm to 20 µm.

When water vapor is supplied to the fuel electrode 21, an oxygen-containing gas or the like is supplied to the air electrode 29, and a current is caused to flow between the fuel electrode 21 and the air electrode 29, the electrolysis cell 20 operates as an SOEC and chemical reactions represented by the following formulas (1) and (2) occur. As a result, hydrogen is generated from the fuel electrode 21, and oxygen is generated from the air electrode 29.

H₂O + 2e⁻ → H₂ + O₂⁻ (at the fuel electrode 21) (1)

O₂⁻ → (1/2)·O₂ + 2e⁻ (at the air electrode 29) (2)

In the electrolysis cell 20 used as an SOEC, in general, an electrically conductive connection member for current collection (the inter connector 16) is joined and fixed to each of the fuel electrode 21 and the air electrode 29 by using a bonding agent, and a potential difference is applied between the fuel electrode 21 and the air electrode 29 through the inter connector 16, whereby a current flows between the fuel electrode 21 and the air electrode 29. The hydrogen gas generated from the fuel electrode 21 is collected.

When the electrolysis cell 20 is used, a fuel gas containing water vapor may be supplied to the fuel electrode 21, for example, at a flow rate of 90 to 140 liters/ (min·cm²) or at a flow rate of 100 to 130 liters/ (min·cm²). In the case of co-electrolysis, a gas containing water vapor and CO₂ may be supplied as the fuel gas. Notably, in the case of a stack in which a plurality of cells are stacked, naturally, the amount of the fuel gas to be supplied is increased, by using a blower, a pump, or the like, in accordance with the number of cells stacked.

When the electrolysis cell 20 is used, a gas containing oxygen may be supplied to the air electrode 29, for example, at a flow rate of 20 to 60 liters/ (min·cm²) or at a flow rate of 30 to 50 liters/ (min·cm²). Oxygen gas or air may be used as the gas containing oxygen. Notably, in the case of a stack in which a plurality of cells are stacked, naturally, the amount of the gas supplied to the air electrode side is increased, by using a blower, a pump, or the like, in accordance with the number of cells stacked.

Although no particular limitation is imposed of the volume of the air chamber 35 which the air electrode 29 faces, the volume of the air chamber 35 is preferably 8 cm³ to 13 cm³, more preferably 9 cm³ to 11 cm³. The volume of the air chamber 35 which the air electrode 29 faces is the volume per cell and means the volume obtained by removing the volumes of portions of the space occupied by the current collecting members, etc.

### (Manufacturing method)

Next, an example of a method of manufacturing the electrolysis cell 20 will be described. Various types of conditions, such as materials, particle diameters, temperatures, application methods, etc., which will be described below, may be changed appropriately. In the following description, "compact" means a molded body before being fired.

### (Formation of green sheet for the fuel electrode substrate layer)

Organic beads (pore-forming material), butyral resin, DOP (plasticizer), FLOWLEN G-700 (dispersant), and a mixed solvent of toluene and ethanol are added to a powder mixture of NiO powder and YSZ powder, followed by mixing with a ball mill, thereby preparing a slurry. The organic beads are spherical particles formed of, for example, a polymer such as poly(methyl methacrylate) or polystyrene. A thin film is formed from the obtained slurry by the doctor blade method, whereby a green sheet for the fuel electrode substrate layer which has a predetermined thickness (for example, 200 µm to 300 µm) is formed. The mixing ratio of NiO powder and YSZ powder used for formation of the green sheet for the fuel electrode can be appropriately set, so long as its performance is attained. The mixing ratio of the NiO powder and the YSZ powder may be, for example, such that the ratio of NiO is 20 to 50 vol% and the ratio of YSZ is 30 to 60 vol%.

### (Formation of green sheet for the fuel electrode functional layer)

Butyral resin, DOP (plasticizer), FLOWLEN G-700 (dispersant), and a mixed solvent of toluene and ethanol are added to a powder mixture of NiO powder and YSZ powder, followed by mixing with a ball mill, thereby preparing a slurry. A thin film is formed from the obtained slurry by the doctor blade method, whereby a green sheet for the fuel electrode functional layer which has a predetermined thickness (for example, 5 µm to 50 µm) is formed. The mixing ratio of NiO powder and YSZ powder used for formation of the green sheet for the fuel electrode functional layer can be appropriately set, so long as its performance is attained. The mixing ratio of the NiO powder and the YSZ powder may be, for example, such that the ratio of NiO is 30 to 60 vol% and the ratio of YSZ is 40 to 70 vol%.

### (Formation of green sheet for the solid electrolyte layer)

Butyral resin, DOP (plasticizer), FLOWLEN G-700 (dispersant), and a mixed solvent of toluene and ethanol are added to YSZ powder, followed by mixing with a ball mill, thereby preparing a slurry. A thin film is formed from the obtained slurry by the doctor blade method, whereby a green sheet for the solid electrolyte layer which has a predetermined thickness (for example, 10 µm) is formed.

### (Formation of a stacked body including the solid electrolyte layer 24, the fuel electrode functional layer 23, and the fuel electrode substrate layer 22)

The green sheet for the fuel electrode substrate layer, the green sheet for the fuel electrode functional layer, and the green sheet for the solid electrolyte layer are bonded together, and debindering is performed at a predetermined temperature (for example, about 280°C). Furthermore, a stacked body including the debindered green sheets is fired at a predetermined temperature (for example, about 1,350°C). As a result, a stacked body including the solid electrolyte layer 24, the fuel electrode functional layer 23, and the fuel electrode substrate layer 22 is obtained. In the present embodiment, the fuel electrode 21 has nano-cracks formed in the interface region R1 and the surface region R2, and the number of the nano-cracks in the surface region R2 is greater than the number of the nano-cracks in the interface region R1. As described above, an example of the method of adjusting the formation of nano-cracks and the amount of nano-cracks is the method of adjusting the highest temperature, the high temperature holding time, the temperature elevating speed, and the temperature lowering speed at the time of firing. The highest temperature at the time of firing is preferably set to, for example, 1,500°C or lower, more preferably set to 1,450°C or lower, further preferably set to 1,400°C or lower. In addition, the highest temperature at the time of firing is preferably set to, for example, 1,100°C or higher, more preferably set to 1,200°C or higher, further preferably set to 1,300°C or higher. The high temperature holding time is preferably set to, for example, 420 minutes or shorter, more preferably set to 360 minutes or shorter, further preferably set to 300 minutes or shorter. In addition, the high temperature holding time is preferably set to, for example, 30 minutes or longer, more preferably set to 40 minutes or longer, further preferably set to 50 minutes or longer. The temperature elevating speed is preferably set to, for example, 3°C/min or slower, more preferably set to 2°C/min or slower, further preferably set to 1.5°C/min or slower, furthermore preferably set to 1.3°C/min or slower. In addition, the temperature elevating speed is preferably set to, for example, 0.3°C/min or faster, more preferably set to 0.5°C/min or faster, further preferably set to 0.8°C/min or faster, furthermore preferably set to 1.0°C/min or faster. The temperature lowering speed is preferably set to, for example, 2°C/min or slower, more preferably set to 1.5°C/min or slower, further preferably set to 1.3°C/min or slower. In addition, the temperature lowering speed is preferably set to, for example, 0.3°C/min or faster, more preferably set to 0.5°C/min or faster, further preferably set to 0.8°C/min or faster.

Notably, the method of manufacturing the cell is not limited to the present method, and the following method may be employed. Poly(vinyl alcohol) (PVA) serving as a binder is added to a mixture of NiO powder and YSZ powder, to thereby prepare a slurry, and the slurry is dried and granulated by using a spray dryer. A compact of the fuel electrode 21 is formed from the resultant granules by die press molding. Subsequently, water and a binder are added to YSZ powder, and the resultant mixture is mixed for 24 hours by using a ball mill, to thereby prepare a slurry. The slurry is applied to the compact of the fuel electrode 21 and shaped, whereby a compact of the solid electrolyte layer 24 is stacked and formed. The stacked body including these compacts is co-sintered in air in an electric furnace (in an oxygen-containing atmosphere) at, for example, 1,350°C, whereby a stacked body including the fuel electrode 21 and the solid electrolyte layer 24 is formed. Notably, a tape laying method, a printing method, etc. may be used for forming, on the fuel electrode 21, a film which becomes the solid electrolyte layer 24.

### (Formation of the reaction prevention layer 25)

Next, the reaction prevention layer 25 is formed. Specifically, polyvinyl alcohol (organic binder) and butyl carbitol (organic solvent) are added to GDC powder, followed by mixing and adjustment of the viscosity of the resultant mixture, whereby a paste for the reaction prevention layer is prepared. The obtained paste for the reaction prevention layer is applied, by means of, for example, screen printing, to the solid electrolyte layer 24 side surface of the above-mentioned stacked body including the solid electrolyte layer 24 and the fuel electrode 21, and firing is performed at, for example, 1,180°C. As a result, the reaction prevention layer 25 is formed, whereby a stacked body including the fuel electrode 21, the solid electrolyte layer 24, and the reaction prevention layer 25 (hereinafter referred to as an "intermediate stacked body") is fabricated.

### (Formation of the air electrode functional layer 26)

Next, the air electrode functional layer 26 is formed. First, LSCF powder and GDC powder are mixed at a mass ratio of 1:1, and polyvinyl alcohol (organic binder) and butyl carbitol (organic solvent) are mixed with the powder mixture, followed by adjustment of the viscosity of the resultant mixture, whereby a paste for the air electrode functional layer is prepared. Subsequently, the prepared paste for the air electrode functional layer is applied, by means of, for example, screen printing, to the surface of the intermediate stacked body on the reaction prevention layer 25 side, and is then dried.

### (Formation of the air electrode current collecting layer 27)

Next, the air electrode current collecting layer 27 is formed. First, LSCF powder, polyvinyl alcohol (organic binder), butyl carbitol (organic solvent), and organic beads (pore forming material) are mixed together, followed by adjustment of the viscosity of the resultant mixture, whereby a paste for the air electrode current collecting layer is prepared. Subsequently, the prepared paste for the air electrode current collecting layer is applied, by means of, for example, screen printing, to the surface of the intermediate stacked body on the air electrode functional layer 26 side, and is then dried. The intermediate stacked body with the paste for the current collecting layer applied thereto is fired at a predetermined firing temperature (for example, 1,100°C). As a result of this firing step, the air electrode current collecting layer 27 is formed, whereby a stacked body including the fuel electrode 21, the solid electrolyte layer 24, the reaction prevention layer 25, the air electrode functional layer 26, and the air electrode current collecting layer 27; i.e., a single electrolysis cell 20, is fabricated.

After that, in order to bring the electrolysis cell 20 into a state in which the electrolysis cell 20 can produce hydrogen, a reduction step of reducing the fuel electrode 21 (namely, reducing NiO contained in the fuel electrode 21 to Ni) is executed. The reduction step is realized by, for example, exposing the fuel electrode 21 to a hydrogen atmosphere at a predetermined temperature for a predetermined period of time. Notably, a reduction gas used in the reduction step is not limited to hydrogen, and other gases such as methane gas may be used. In addition, no limitation is imposed on the concentration of the reduction gas. The reduction gas in which the concentration of a reducing agent is less than 100% by volume may include nitrogen gas in addition to hydrogen gas, etc.

### (Description of Effects)

As described above, the fuel electrode 21 of the above-described embodiment has nano-cracks formed in the interface region R1 and the surface region R2, and the number of the nano-cracks in the surface region R2 is greater than the number of the nano-cracks in the interface region R1. The inventor found that occurrence of cracking in the solid electrolyte layer 24 can be suppressed by using such a fuel electrode 21. As a result of this, it is possible to suppress lowering of current density at the thermoneutral voltage (1.3 V). Furthermore, as a result of this, the electrolysis cell 20 which can operate over a long period of time can be provided. Although the mechanism in which occurrence of cracking in the solid electrolyte layer 24 is suppressed by the fuel electrode 21 of the above-described embodiment is not certain, the following mechanism is presumed. Namely, it is considered that, by virtue of formation of nano-cracks in the interface region R1 and the surface region R2, stresses produced due to heat cycles, etc. can be relaxed. Conceivably, the stresses are produced due to the difference in thermal expansion coefficient between the solid electrolyte layer 24 and the fuel electrode 21. In addition, it is considered that, since the number of the nano-cracks in the surface region R2 is greater than the number of the nano-cracks in the interface region R1, generation of a crack which is stemming from nano-cracks and is larger than the nano-cracks is suppressed as compared with the case where the number of the nano-cracks in the interface region R1 is greater than that in the surface region R2.

In the below, there will be described a test which was performed to confirm that occurrence of cracking in the solid electrolyte layer 24 is suppressed by the fuel electrode 21 of the above-described embodiment.

### (Test)

In this test, a plurality of types of samples (fired bodies) were used for the SOEC (the electrolysis cell 20) according to the above-described embodiment. They were prepared by changing the thicknesses of the fuel electrode functional layer 23 and the fuel electrode substrate layer 22. Specifically, as shown in Table 1, 10 levels were provided, and one test sample was fabricated for each level. Table 1 shows, for each of Sample No. 1 to Sample No. 10, the results of evaluation of the number of nano-cracks, the current density at the thermoneutral voltage after the heat cycle test, and presence/absence of cracking.

In these samples, the thickness of the air electrode 29 was 100 µm, the thickness of the fuel electrode 21 was 500 um, and the thickness of the solid electrolyte layer 24 (8YSZ) was 10 µm; i.e., these thicknesses were the same among the samples. The thicknesses of the fuel electrode functional layer 23 and the fuel electrode substrate layer 22 are shown in Table 1. The thickness of the fuel electrode functional layer 23 was changed between two thicknesses, and the thickness of the fuel electrode substrate layer 22 was changed between two thicknesses. The shape of each sample as viewed from the above was a square shape of 10 cm × 10 cm. The adjustment of formation of nano-cracks and the amount of nano-cracks was performed by adjusting the firing temperature, the high temperature holding time, the temperature elevating speed, and the temperature lowering speed at the time of firing.

For these samples, the following heat cycle electrolytic test was performed. Specifically, after heating each sample from the room temperature (25°C) to 700°C, an electrolytic test was performed in which a current was caused to flow between the fuel electrode 21 and the air electrode 29, while hydrogen and water vapor were supplied to the fuel electrode 21 and air was supplied to the air electrode 29. Subsequently, the sample was cooled to the room temperature. The series of these steps was repeated 5 times, and the current density of the sample at the thermoneutral voltage after the heat cycle electrolytic test was measured. In addition, presence/absence of cracking of the surface of the solid electrolyte layer 24 after the measurement was checked by using a binocular microscope.

In addition, the number of nano-cracks in each of the interface region R1 and the surface region R2 in the sample whose current density had been measured was determined through 30,000X observation under an SEM.

### (Results)

Table 1 shows the results of the evaluation.

### [Table 1]

**Table 1**

| Sample No. | Fuel electrode functional layer | | Fuel electrode substrate layer | | Highest temperature (°C) | Holding time (hr) | Temperature elevating speed (°C/min) | Temperature lowering speed (°C/min) | Nano-cracks in interface region R1 | Nano-cracks in surface region R2 | Current density at thermoneutral voltage (1.3 V) (A/cm²) | Presence/absence of cracking in solid electrolyte layer | Evaluation results |
|---|---|---|---|---|---|---|---|---|---|---|---|---|---|
| | Material | Thickness (µm) | Material | Thickness (µm) | | | | | | | | | |
| | | | | | | | | | Number (count) | Number (count) | | | |
| 1 | Ni-YSZ | 10 | Ni-YSZ | 400 | 1350 | 3 | 4 | 4 | 8 | 6 | 0.62 | Cracking occurred | × |
| 2 | Ni-YSZ | 10 | Ni-YSZ | 400 | 1350 | 3 | 3 | 2 | 3 | 5 | 0.87 | No cracking | ○ |
| 3 | Ni-YSZ | 10 | Ni-YSZ | 400 | 1350 | 3 | 0.5 | 0.3 | 2 | 4 | 0.85 | No cracking | ○ |
| 4 | Ni-YSZ | 10 | Ni-YSZ | 400 | 1350 | 5 | 1.3 | 1 | 2 | 5 | 0.91 | No cracking | ○ |
| 5 | Ni-YSZ | 10 | Ni-YSZ | 400 | 1350 | 5 | 0.2 | 0.2 | 0 | 1 | 0.61 | Cracking occurred | × |
| 6 | Ni-YSZ | 20 | Ni-YSZ | 300 | 1400 | 3 | 4 | 4 | 9 | 7 | 0.59 | Cracking occurred | × |
| 7 | Ni-YSZ | 20 | Ni-YSZ | 300 | 1400 | 3 | 3 | 2 | 3 | 6 | 0.88 | No cracking | ○ |
| 8 | Ni-YSZ | 20 | Ni-YSZ | 300 | 1400 | 3 | 0.5 | 0.3 | 2 | 3 | 0.86 | No cracking | ○ |
| 9 | Ni-YSZ | 20 | Ni-YSZ | 300 | 1400 | 5 | 1.3 | 1 | 3 | 5 | 0.89 | No cracking | ○ |
| 10 | Ni-YSZ | 20 | Ni-YSZ | 300 | 1400 | 5 | 0.2 | 0.2 | 0 | 2 | 0.55 | Cracking occurred | × |

As shown in Table 1, in each of the samples in which nano-cracks were formed in the interface region R1 and the surface region R2 and the number of the nano-cracks in the surface region R2 was greater than the number of the nano-cracks in the interface region R1, occurrence of cracking in the solid electrolyte layer 24 was not found. The test results show that substantially no nano-crack was formed in the interface region R1 which extends 3.0 µm from the interface with the solid electrolyte layer. Nano-cracks are not required to be formed in the region which extends 3.0 µm from the interface, so long as nano-cracks are present entirely in the interface region R1 extending from a point which is 3.0 µm from the interface to a point which is 10 µm from the interface.

The present invention is not limited to the above-described embodiment, and may be carried out in various configurations, so long as they do not depart from the gist of the invention. For example, technical features in the embodiment corresponding to technical features in the modes described in "SUMMARY OF INVENTION" may be appropriately replaced or combined in order to solve the entirety or a part of the aforementioned problems or to attain the entirety or a part of the aforementioned effects. Unless described as essential features in the present specification, the technical features may be appropriately deleted.

As long as the electrolysis cell 20 includes the fuel electrode 21, the solid electrolyte layer 24, and the air electrode 29, it is possible to change the electrolysis cell; i.e., the shapes, materials, sizes, etc. of the constituent elements can be changed, and provision/omission of other constituent elements can be changed. For example, the configuration of the electrolysis cell 20 may be changed as follows.
(1) The electrolysis cell 20 may be, for example, a fuel electrode support type, have a flat-plate-like shape or a cylindrical shape, be a flat type, a vertical-stripe type, or a horizontal-stripe type, or be used for a single-end supported stack or for a double-end supported stack. Also, the cell may have an elliptical cross section.
(2) The configurations described as different modes may be combined with each other.

### DESCRIPTION OF REFERENCE NUMERALS AND SYMBOLS

10: electrolysis stack, 12,13: end plate, 14: bolt, 15a, 15b, 15c, 15d: passage, 16: inter connector, 17: fuel electrode frame, 19: air electrode frame, 20: electrolysis cell, 21: fuel electrode, 22: fuel electrode substrate layer, 23: fuel electrode functional layer, 24: solid electrolyte layer, 24a: front surface, 25: reaction prevention layer, 26: air electrode functional layer, 27: air electrode current collecting layer, 29: air electrode, 30: separator, 31: brazing filler metal, 32: current collector, 33: fuel chamber, 34: current collector, 35: air chamber, 37: opening, 47: separator-equipped cell, 52, 53: terminal plate, 60: hydrogen production apparatus, 61: hot module, 62: vaporizer, 63: heat exchanger, 64: heater, 65: heat insulator, 66: condenser, Q: interface, R1: interface region, R2: surface region

## Claims

1. A solid oxide electrolysis cell comprising:
an air electrode containing a complex oxide having a perovskite structure;
a fuel electrode; and
a solid electrolyte layer disposed between the air electrode and the fuel electrode, wherein
the fuel electrode has nano-cracks formed in an interface region which extends 10 µm from an interface on the solid electrolyte layer side, and nano-cracks formed in a surface region which extends 10 µm from a surface located opposite the solid electrolyte layer side, and
the number of the nano-cracks in the surface region is greater than the number of the nano-cracks in the interface region.

2. The solid oxide electrolysis cell according to claim 1, wherein a fuel gas containing water vapor is supplied to the fuel electrode at a flow rate of 100 to 130 liters/ (min·cm²).

3. The solid oxide electrolysis cell according to claim 1 or 2, wherein a gas containing oxygen is supplied to the air electrode at a flow rate of 30 to 50 liters/ (min·cm²).

4. The solid oxide electrolysis cell according to claim 1 or 2, wherein an air chamber that the air electrode faces has a volume of 9 cm³ to 11 cm³.

5. A separator-equipped cell comprising:
the solid oxide electrolysis cell as recited in claim 1 or 2; and
a separator which is disposed on the solid electrolyte layer and has an opening at its center.

6. An electrolysis stack in which a plurality of the solid oxide electrolysis cells as recited in claim 1 or 2 are stacked.

7. A hot module comprising:
the electrolysis stack as recited in claim 6;
a vaporizer for producing water vapor to be supplied to the electrolysis stack;
a heat exchanger for performing heat exchange with a gas to be supplied to the electrolysis stack;
a heater for heating the electrolysis stack; and
a heat insulator in which the electrolysis stack, the vaporizer, the heat exchanger, and the heater are disposed.

8. A hydrogen production apparatus comprising the hot module as recited in claim 7.
